# EUROPÄISCHE PATENTANMELDUNG

(11) **EP 2 799 749 A1**
(43) Veröffentlichungstag der Anmeldung: **05.11.2014**
(21) Anmeldenummer: 14163615.9
(22) Anmeldetag: 04.04.2014
(51) Int. Cl.: F16L 19/02

(54) **Ventileinrichtung**

(30) Priorität: 03.05.2013 DE 202013004261 U
(71) Anmelder: GEMÜ Gebr. Müller Apparatebau GmbH & Co. Kommanditgesellschaft, 74653 Ingelfingen (DE)
(72) Erfinder: Müller, Fritz, 74653 Ingelfingen (DE); Oettinger, Nicole, 74635 Kupferzell (DE); Mayer, Peter, 74523 Schwäbisch Hall (DE)
(74) Vertreter: DREISS Patentanwälte PartG mbB

(57) **Zusammenfassung**

Die Erfindung betrifft eine Ventileinrichtung (10) zur Absperrung oder Regelung eines Durchflusses von strömenden Flüssigkeiten oder Gasen, wobei die Ventileinrichtung (10) umfasst: - mindestens ein Einlass-Anschlusselement (20) und mindestens ein Auslass-Anschlusselement (22), die jeweils in einem Anschlussbereich (40) an freien Enden der in der Ventileinrichtung (10) angeordneten Strömungswege (14) angeordnet sind, und - mindestens ein Verschlussteil, das die Strömungswege (14) öffnet, sperrt und/oder miteinander verbindet, wobei, mindestens ein Einlass-Anschlusselement (20) und/oder mindestens ein Auslass-Anschlusselement (22) lösbar mit Hilfe einer in Achsrichtung geteilten Schraubhülse (30) an der Ventileinrichtung (10) angeordnet ist.

## Beschreibung

Die Erfindung betrifft eine Ventileinrichtung zur Absperrung oder Regelung eines Durchflusses von strömenden Fluiden, insbesondere von Flüssigkeiten oder Gasen, mit den Merkmalen des Oberbegriffs des Anspruchs 1.

Bei der Steuerung von strömenden Flüssigkeiten, Gasen oder Dampf sind in vielen Anwendungsbereichen oft komplexe Funktionalitäten erforderlich und erfolgen heute zum Beispiel über viele einzelne Ventile bzw. Ventileinrichtungen. Die Funktionen mehrerer Ventile werden bekanntermaßen auch z.B. in sog. Mehrwegventilblöcken zusammengefasst. Die Ventile und die Mehrwegventilblöcke sind über Fittings und Rohre miteinander verbunden. Einlass- und Auslass-Leitungen der Ventileinrichtungen werden dazu bekanntermaßen in Anschlussbereiche der Ventileinrichtungen z.B. eingeschweißt oder eingeklebt. Die DE 10 2006 021 709 A1 beispielsweise zeigt ein Absperrventil, bei dem die Anschlussleitungen in das Absperrventil eingeschraubt sind.

Durch die vielfältigen Anwendungsmöglichkeiten besteht der Wunsch nach einer flexiblen und einfachen Handhabung der Ventileinrichtungen. Insbesondere ist für einen Kunden ein einfaches und flexibel handhabbares Anschließen der Einlass- und Auslass-Leitungen an die Ventileinrichtungen ein Indiz für eine gut durchdachte Technologie.

Der Erfindung liegt die Aufgabe zugrunde, das Anschließen der Einlass- und Auslass-Leitungen an eine Ventileinrichtung bei einer flexiblen Handhabung weiter zu vereinfachen.

Zur Lösung der Aufgabe wird erfindungsgemäß vorgeschlagen, dass mindestens ein Einlass-Anschlusselement und/oder mindestens ein Auslass-Anschlusselement lösbar mit Hilfe einer in Achsrichtung geteilten Schraubhülse an der Ventileinrichtung angeordnet ist/sind.

Die Anschlusselemente bilden den Übergang der Ventileinrichtung zu den Anschlussleitungen und umgekehrt. Erfindungsgemäß werden die Anschlussleitungen nicht direkt an der Ventileinrichtung befestigt, sondern mittels eines separaten Befestigungselements, nämlich die Schraubhülse, die beim Verbinden mit einem Gewinde der Ventileinrichtung nach Art einer Schraubverbindung zusammenwirkt. Das hat den Vorteil, dass es sich hierbei einerseits um eine lösbare Verbindung handelt, andererseits kann das Anschlusselement mit samt dort angeschlossener Teile (Fittings, Leitungen, etc.) beim Anschließen oder beim Lösen nicht verdreht oder gedreht werden. Dies ist oft sehr hinderlich. Außerdem kann mit einfachen Mitteln eine druckdichte Verbindung geschaffen werden.

Die lösbare Verbindung bzw. Anschlussmöglichkeit der Anschlussleitung ermöglicht die Austauschbarkeit des Anschlusselements. So kann gemäß der Anforderungen des über die Ventileinrichtung zu steuernden Mediums (z.B. Flüssigkeit, Gas, Dampf) das Anschlusselement entsprechend angepasst bzw. optimiert werden. Beschädigte Anschlusselemente sind schnell ausgetauscht.

Die Befestigung der Anschlussleitung am Anschlusselement ist beliebig. Dies kann über ein am Anschlusselement angeordnetes Innen- oder Außengewinde aber auch über eine Steckverbindung geschehen, die ebenfalls druckdicht ausgebildet sein kann. Zwischen dem Anschlusselement und der Anschlussleitung kann bei Bedarf auch zusätzlich ein Fitting vorgesehen sein.

Dadurch, dass die Schraubhülse in Achsrichtung geteilt ist, ist die Form des Anschlusselements für die Erfindung bedeutungslos. Bei einer beispielsweise zweigeteilten Schraubhülse kann die Schraubhülse von außen radial an das Anschlusselement angelegt werden und damit das Anschlusselement sicher umschließen. Bei Bedarf kann die Schraubhülse auch mehr als zwei Teile umfassen. Die Innenfläche der Schraubhülse sollte dabei jedoch zumindest abschnittsweise der Kontur des Anschlusselements folgen, damit eine zuverlässige Verbindung geschaffen werden kann. Die Schraubhülse ist aus Metall, insbesondere Edelstahl, oder Kunststoff hergestellt.

In einer bevorzugten Ausführungsform ist vorgesehen, dass das Anschlusselement eine Umfangsnut umfasst, in die zur Arretierung des Anschlusselements zumindest ein Teil eines in Achsrichtung geteilten Ringelements oder Spannrings zumindest abschnittsweise eingreift. Dabei ist insbesondere vorgesehen, dass das Ringelement ein L-förmiges Profil aufweist, wobei ein Schenkel des L-förmigen Profils in die Umfangsnut eingreift, und das Ringelement im Bereich der der Ventileinrichtung zugewandten Stirnseite des Anschlusselements angeordnet ist. Diese Ausgestaltung weist den Vorteil auf, dass die Arretierung des Anschlusselements in einer einfachen Weise von vorne montiert werden kann. Das beispielsweise zweigeteilte Ringelement kann vor dem Einsetzen des Anschlusselements in den Anschlussbereich beidseitig in die Umfangsnut des Anschlusselements eingesetzt werden. Durch das Ringelement wird ein reibungsarmes Verbinden der Anschlussleitung über das Anschlusselement realisiert, so dass bei einem Einschrauben und einem Herausschrauben der Schraubhülse und Befestigen des Anschlusselements an die Ventileinrichtung das Anschlusselement nicht mitgedreht wird.

Außerdem ist vorgesehen, dass das Anschlusselement eine radial nach außen abragende Schulter aufweist, die insbesondere als umlaufender Außenbund ausgebildet ist. Die Schulter dient bevorzugt dazu, eine Anpressfläche für die Schraubhülse, oder zumindest einen Teil davon, zu bilden, über die das Anschlusselement an die Ventileinrichtung angeordnet wird.

In einer alternativen Ausführungsform ist vorgesehen, dass die Schraubhülse eine radial nach innen ragende, insbesondere als umlaufender Innenbund ausgebildete Schulter aufweist, wobei die Schulter des Anschlusselements und die Schulter der Schraubhülse beim Einschrauben der Schraubhülse in die Ventileinrichtung aneinander anliegen und zusammenwirken. Dabei verlaufen vorzugsweise die aneinander anliegenden Anlageflächen der beiden Schultern des Anschlusselements und der Schraubhülse komplementär zueinander und schließen dabei einen Winkel zur Längsachse ein, der kleiner als 90° ist. Dadurch wird ein besonders reibungsarmes Verbinden der Anschlussleitung über das Anschlusselement realisiert, so dass bei einem Einschrauben und einem Herausschrauben des Anschlusselements an die Ventileinrichtung ein Mitdrehen der Anschlussleitung verhindert wird. Die beiden aneinander liegenden Schultern bilden eine so große Fläche, dass eine besonders druckdichte Verbindung erzeugt werden kann.

Zum Einschrauben und Herausschrauben der Schraubhülse an die Ventileinrichtung ist vorgesehen, dass die Schraubhülse ein Außengewinde aufweist, das bevorzugt mit einem im Anschlussbereich der Ventileinrichtung angeordneten Innengewinde zusammenwirkt. Dies stellt eine kostengünstige und zuverlässige Verbindung dar. Die Ventileinrichtung wird beim Einschrauben und Herausschrauben der Schraubhülse nicht in Mitleidenschaft gezogen, wie es beispielsweise bei einer Schweiß- oder Klebeverbindung sein kann. Um das Einschrauben und Herausschrauben der Schraubhülse zu erleichtern, kann die Schraubhülse an einem von der Ventileinrichtung herausragenden Teil am Außenumfang beispielsweise eine Rändelung oder eine Werkzeugangriffsfläche aufweisen. Die Werkzeugangriffsfläche kann z.B. einen Sechskant für einen Schraubschlüssel oder z.B. radial angeordnete Senkbohrungen zum Einstecken von Stiften oder Hakenschlüsseln zum Erleichtern der Drehbewegung umfassen.

Um zu gewährleisten, dass die Verbindung druckdicht ausgebildet ist, kann zwischen dem Anschlusselement und der Ventileinrichtung außerhalb des Gewindebereichs mindestens eine Dichtung, insbesondere ein O-Ring, angeordnet sein. Eine bevorzugte Position für die Dichtung ist beispielsweise zwischen der Stirnseite des Anschlusselements und der Ventileinrichtung.

Die Ventileinrichtung sowie die Anschlusselemente sind bevorzugt aus Kunststoff oder Edelstahl hergestellt. Bei Verwendung von Kunststoff kann die Ventileinrichtung mit einem geringen Gewicht hergestellt werden.

Weitere Vorteile, Merkmale und Einzelheiten der Erfindung ergeben sich aus den Unteransprüchen sowie der nachfolgenden Beschreibung, in der zwei besonders bevorzugte Ausführungsbeispiele beschrieben sind. Dabei können die in der Zeichnung dargestellten und in der Beschreibung sowie den Ansprüchen erwähnten Merkmale jeweils einzeln für sich oder in beliebiger Kombination erfindungswesentlich sein.

In der Zeichnung zeigen, jeweils in schematischer Form:
Figur 1 eine Seitenansicht der erfindungsgemäßen Ventileinrichtung;
Figur 2 ein Anschlusselement mit einer zweigeteilten Schraubhülse zum Anschluss an eine Anschlussleitung der Ventileinrichtung von Figur 1 in einer ersten Ausführungsform in unterschiedlichen Ansichten;
Figur 3 ein Anschlusselement mit einer zweigeteilten Schraubhülse zum Anschluss an eine Anschlussleitung der Ventileinrichtung von Figur 1 in einer zweiten Ausführungsform in unterschiedlichen Ansichten;
Figur 4 eine Seitenansicht der erfindungsgemäßen Schraubhülse in Richtung des Pfeils IV gemäß Figur 6;
Figur 5 eine Seitenansicht der Schraubhülse in Richtung des Pfeils V gemäß Figur 6; und
Figur 6 eine Draufsicht auf die Schraubhülse in Richtung des Pfeils VI gemäß Figur 5.

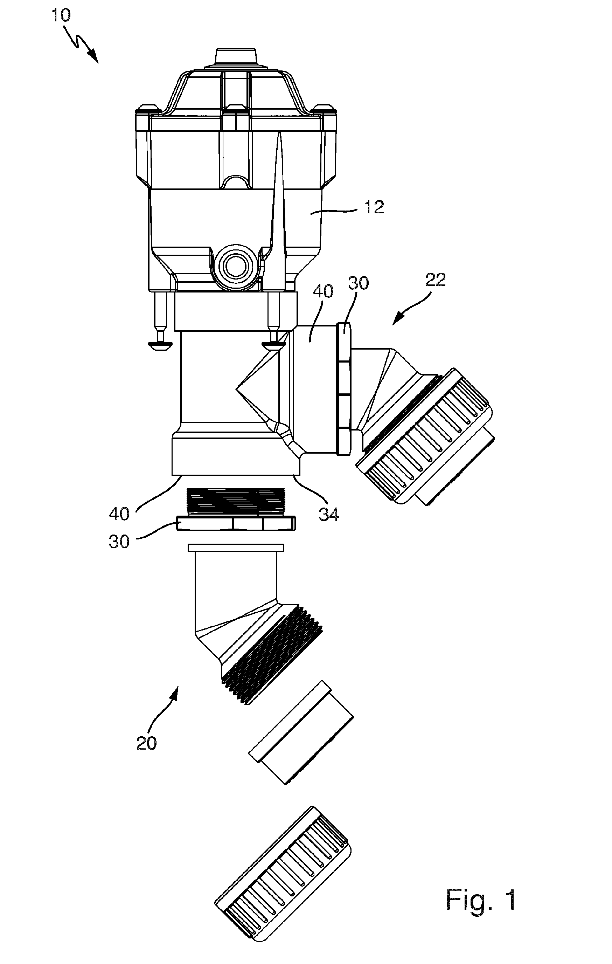

Die Figur 1 zeigt eine Ausführungsform der erfindungsgemäßen Ventileinrichtung 10 in einer Seitenansicht. Die Ventileinrichtung 10 umfasst üblicherweise im Innern eine Membrane, die über eine Betätigungseinrichtung 12 der Ventileinrichtung 10 zusammenwirkt (nicht sichtbar). Die Membrane wird in der Regel pneumatisch, elektrisch oder mechanisch (manuell) betätigt und sperrt in der Ventileinrichtung 10 vorgesehene Strömungswege ab oder verbindet diese.

Ferner weist die Ventileinrichtung 10 ein Einlass-Anschlusselement 20 und ein Auslass-Anschlusselement 22 zum Anschließen von Anschlussleitungen auf. Möglich ist auch, dass mehrere Einlass-Anschlusselemente 20 und/oder mehrere Auslass-Anschlusselement 22 an der Ventileinrichtung 10 angeordnet sind. Das Einlass-Anschlusselement 20 und das Auslass-Anschlusselement 22 kann auch mehrteilig ausgebildet sein. Eine mögliche Ausgestaltung eines kompletten Einlass-Anschlusselements 20 ist in Figur 1 in einer Explosionszeichnung dargestellt; ein identisch ausgebildetes Anschlusselement ist in zusammengebauter Form als Auslass-Anschlusselement 22 dargestellt. Natürlich kann das Einlass-Anschlusselement 20 und das Auslass-Anschlusselement 22 auch unterschiedliche Teile umfassen und damit unterschiedlich ausgebildet sein.

Über das Einlass-Anschlusselement 20 wird ein flüssiges oder gasförmiges Medium in den Strömungsweg der Ventileinrichtung 10 eingeleitet. Der Strömungsweg des Mediums kann anschließend über die Ventileinrichtung 10 gesperrt werden. Bei geöffnetem Strömungsweg tritt das Medium anschließend über das Auslass-Anschlusselemente 22 wieder aus. Die Anschlusselemente 20, 22 sind jeweils an einem freien Ende des Strömungswegs angeordnet.

Die Anschlusselemente 20, 22 sind bevorzugt aus Kunststoff oder Edelstahl hergestellt.

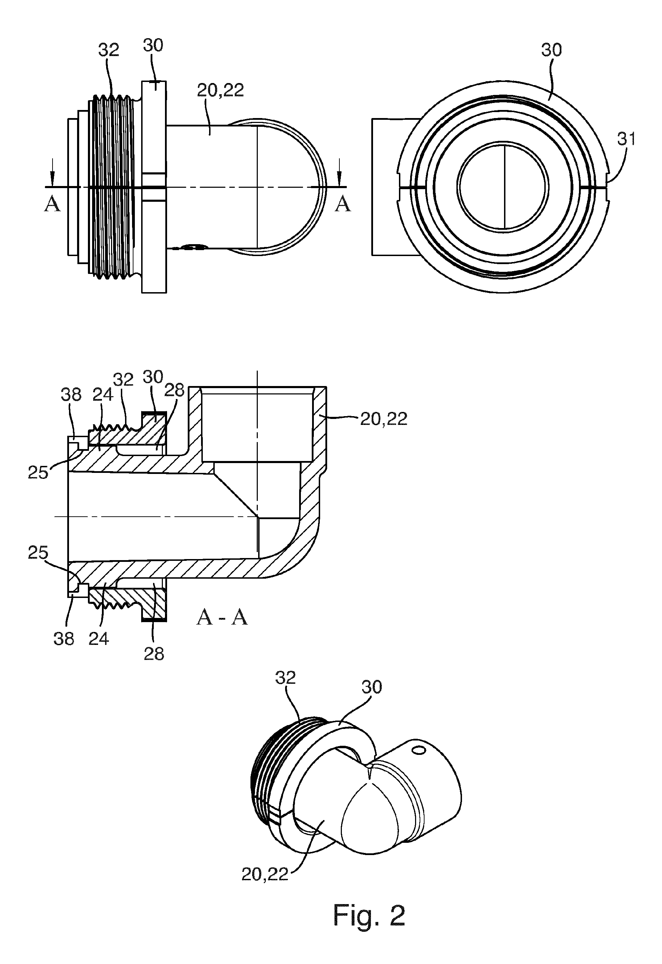

Die Figur 2 zeigt ein Anschlusselement 20,22 mit einer zweigeteilten Schraubhülse 30 zum Anschluss an eine Anschlussleitung der Ventileinrichtung 10 in einer ersten Ausführungsform in unterschiedlichen Ansichten. Die Figur 2 zeigt links oben eine Seitenansicht, rechts oben eine Draufsicht auf die Schraubhülse 30, links unten einen Schnitt A - A aus der Seitenansicht und rechts unten eine perspektivische Darstellung.

Das Anschlusselement 20, 22 ist hohl ausgebildet und weist insbesondere in einem Bereich, der im eingebauten Zustand zur Ventileinrichtung 10 zeigt, eine radial nach außen abragende Schulter 24 auf, die insbesondere als umlaufender Außenbund ausgebildet ist. Außerdem weist das Anschlusselement 20, 22 zwischen der Schulter 24 und der Stirnseite des Anschlusselements 20, 22 eine Umfangsnut 25 auf.

Am bezüglich der Umfangsnut 25 gegenüberliegenden Ende des Anschlusselements 20, 22 ist das Anschlusselement 20, 22 gekrümmt, insbesondere rechtwinklig ausgebildet. Anders geartete Ausbildungen des Anschlusselements 20, 22 sind auch möglich. Die Befestigung der Anschlussleitung am Anschlusselement 20, 22 ist beliebig. Sie kann beispielsweise über ein am Anschlusselement 20, 22 angeordnetes Innen- oder Außengewinde aber auch über eine Steckverbindung geschehen. Die gewählten Anschlussmöglichkeiten sind druckdicht ausgebildet.

Das Anschlusselement 20, 22 weist am Außenumfang anschließend an die Schulter 24 eine ebene, glatt ausgebildete radiale Einschnürung 28 auf.

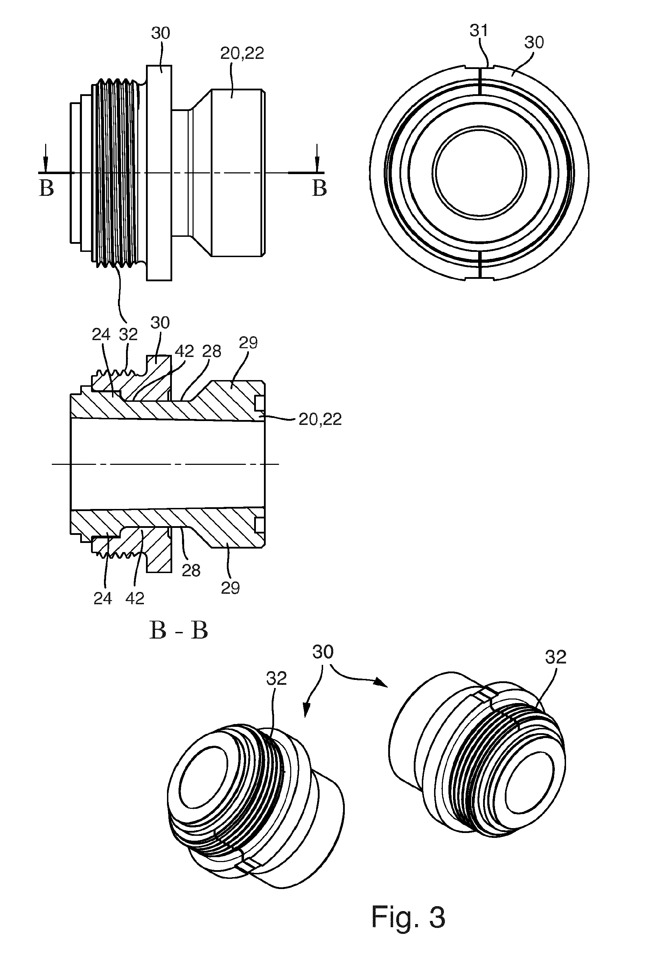

Die Figur 3 zeigt eine alternativ Ausführungsform eines Anschlusselements 20, 22, das geradlinig ausgebildet ist, also keine Krümmung aufweist. Die Figur 3 zeigt dazu mehrere Ansichten. So wird links oben eine Seitenansicht, rechts oben eine Draufsicht auf die Schraubhülse 30, links unten ein Schnitt B - B der Seitenansicht und rechts unten eine perspektivische Ansicht dargestellt. Die glatt ausgebildete radiale Einschnürung 28 ist durch eine zweite radial nach außen abragende Schulter 29 begrenzt. In der in Figur 3 dargestellten Ausführungsform kann auf die an der Stirnseite des Anschlusselements 20, 22 angeordnete Umfangsnut 25 aus Figur 2 verzichtet werden.

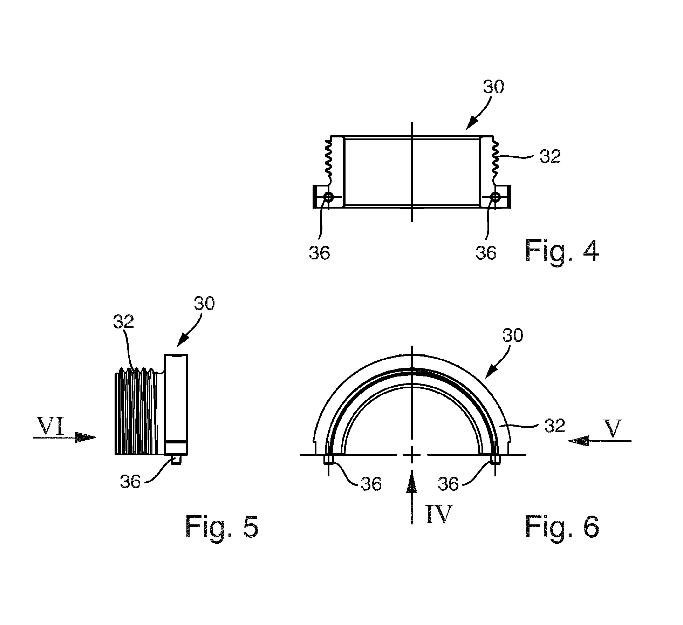

Das Anschlusselement 20, 22 wird erfindungsgemäß durch eine geteilte mehrteilige Schraubhülse 30 der Ventileinrichtung 10 befestigt. Die Figuren 4 bis 6 zeigen einen Teil einer geteilten mehrteiligen Schraubhülse 30 im Detail. Die geteilte Schraubhülse 30 ist bevorzugt zweiteilig, sie kann aber auch mehr als zwei Teile umfassen. Bei der zweigeteilten Schraubhülse 30 bildet ein erster Teil eine erste Hälfte und ein zweiter Teil eine zweite Hälfte der axial geteilten Schraubhülse 30. Die Schraubhülse 30 ist bevorzugt aus Kunststoff oder Edelstahl hergestellt.

Die Schraubhülse 30 weist ein Außengewinde 32 auf, das beim Befestigen des Anschlusselements 20, 22 mit einem Innengewinde 34 der Ventileinrichtung 10 zusammenwirkt. Außerdem ist an einem der beiden freien Ende der in den Figuren 4 bis 6 dargestellten ersten Hälfte der Schraubhülse 30 ein Zapfen 36 angeordnet, der beim Zusammensetzen der kompletten Schraubhülse 30 mit einer Zapfenaufnahme am freien Ende der zweiten Hälfte der Schraubhülse 30 zusammenwirkt (nicht dargestellt) und so eine sichere Verbindung der Teile der Schraubhülse 30 gewährleistet.

Für die Ausgestaltung der Innenfläche der Schraubhülse 30 gibt es verschiedene Möglichkeiten, wobei deren jeweilige Montage unterschiedlich ausgeführt werden muss. Mit Hilfe der Figuren 2 und 3 werden zwei mögliche Ausführungsbeispiele erläutert.

Für das in Figur 2 dargestellte erste Ausführungsbeispiel ist zusätzlich ein in Achsrichtung bevorzugt zweigeteiltes Ringelement 38 zur Arretierung des Anschlusselements 20, 22 nötig. Das Ringelement 38 weist bevorzugt einen L-förmigen Querschnitt auf. Das Ringelement 38 kann auch mehrteilig ausgebildet sein.

Die Montage des Anschlusselements 20, 22 in Figur 2 verläuft folgendermaßen: Ein Schenkel des L-förmig ausgebildeten und geteilten Ringelements 38 wird vor dem Montieren des Anschlusselements 20, 22 von außen in die Umfangsnut 25 des Anschlusselements 20, 22 eingesetzt.

Außerdem kann eine Dichtung, die beispielsweise als O-Ring ausgebildet ist, in eine dafür vorgesehene Nut in einem Anschlussbereich, vorzugsweise zwischen der Stirnfläche des Anschlusselements 20, 22 und der Ventileinrichtung 10, eingesetzt werden (nicht dargestellt).

Die Schraubhülse 30 ist auf der Innenseite eben ausgebildet, so dass die zweigeteilte Schraubhülse 30 in einfacher Weise beidseitig um den Umfang der Schulter 24 des Anschlusselements 20, 22 gelegt werden kann. Die Schraubhülse 30 umschließt damit das Anschlusselement 20, 22 und kann anschließend mit ihrem Außengewinde 32 in das Innengewinde 34 des Anschlussbereichs 40 manuell oder mittels eines Werkzeugs eingeschraubt werden (siehe Figur 1). Um das Einschrauben und Herausschrauben der Schraubhülse 30 zu erleichtern, kann die Schraubhülse 30 am Außenumfang beispielsweise eine Rändelung oder eine Werkzeugangriffsfläche 31 aufweisen. Die Schraubhülse 30 gleitet dabei auf der Schulter 24 des Anschlusselements 20, 22, so dass dabei das Anschlusselement 20, 22 nicht mitgedreht.

Die Schraubhülse 30 wird so lange gedreht, bis die Schraubhülse 30 das Ringelement 38 als Anschlag erreicht hat. In dieser Position liegt die Stirnseite des Anschlusselements 20, 22 im Anschlussbereich 40 der Ventileinrichtung 10 an. Der in die Umfangsnut 25 eingesetzte Schenkel des Ringelements 38 arretiert das Anschlusselement 20, 22 im Anschlussbereich 40 der Ventileinrichtung 10. Das Anschlusselement 20, 22 ist jetzt druckdicht und sicher im Anschlussbereich 40 der Ventileinrichtung 10 eingesetzt, kann aber jederzeit wieder herausgeschraubt werden.

Anschließend kann an das Anschlusselement 20, 22 die Anschlussleitung angeschlossen werden. Dies kann in beliebiger Weise, beispielsweise über ein am Anschlusselement 20, 22 angeordnetes Innen- oder Außengewinde aber auch über eine Steckverbindung geschehen (nicht dargestellt).

In dem in Figur 3 dargestellten zweiten Ausführungsbeispiel ist die Innenseite der Schraubhülse 30 dem Profil des Anschlusselements 20, 22 angepasst. Dazu weist die Schraubhülse 30 eine radial nach innen ragende, insbesondere als umlaufender Innenbund ausgebildete Schulter 42 auf, die zur Einschnürung 28 des Anschlusselements 20, 22 komplementär ausgebildet ist. Beim Einschrauben der Schraubhülse 30 in den Anschlussbereich 40 der Ventileinrichtung 10 liegt die Schulter 42 bündig in der Einschnürung 28.

Außerdem liegen die jeweiligen Anlageflächen der Schulter 24 des Anschlusselements 20, 22 und der Schulter 42 der Schraubhülse 30 insbesondere beim Einschrauben der Schraubhülse 30 aneinander an und wirken derart zusammen, dass die Schraubhülse 30 das Anschlusselement 20, 22 in den Anschlussbereich 40 hineinschiebt. Besonders vorteilhaft ist dabei, wenn die aneinander anliegenden Anlageflächen der beiden Schultern 24 und 42 komplementär zueinander verlaufen und einen Winkel zur Längsachse einschließen, der kleiner als 90° ist. Bei dieser zweiten Ausführungsform kann auf das geteilte Ringelement 38 der ersten Ausführungsform verzichtet werden. Ansonsten verläuft die Montage des Anschlusselements 20, 22 gemäß der Beschreibung zur ersten Ausführungsform.

## Patentansprüche

1. Ventileinrichtung (10) zur Absperrung oder Regelung eines Durchflusses von strömenden Flüssigkeiten oder Gasen, wobei die Ventileinrichtung (10) umfasst:
- mindestens ein Einlass-Anschlusselement (20) und mindestens ein Auslass-Anschlusselement (22), die jeweils in einem Anschlussbereich (40) an freien Enden der in der Ventileinrichtung (10) angeordneten Strömungswege (14) angeordnet sind, und
- mindestens ein Verschlussteil, das die Strömungswege (14) öffnet, sperrt und/oder miteinander verbindet,
**dadurch gekennzeichnet, dass**
mindestens ein Einlass-Anschlusselement (20) und/oder mindestens ein Auslass-Anschlusselement (22) lösbar mit Hilfe einer in Achsrichtung geteilten Schraubhülse (30) an der Ventileinrichtung (10) angeordnet ist.

2. Ventileinrichtung nach Anspruch 1, **dadurch gekennzeichnet, dass** das Anschlusselement (20; 22) eine Umfangsnut (25) umfasst, in die zur Arretierung des Anschlusselements (20; 22) zumindest ein Teil eines in Achsrichtung geteilten und die Umfangsnut (25) radial überragenden Ringelements (38) zumindest abschnittsweise eingreift.

3. Ventileinrichtung nach Anspruch 2, **dadurch gekennzeichnet, dass** das Ringelement (38) ein L-förmiges Profil aufweist, wobei ein Schenkel des L-förmigen Profils in die Umfangsnut (25) eingreift, und das Ringelement (38) im Bereich der der Ventileinrichtung (10) zugewandten Stirnseite des Anschlusselements (20; 22) angeordnet ist.

4. Ventileinrichtung nach einem der vorhergehenden Ansprüche, **dadurch gekennzeichnet, dass** das Anschlusselement (20; 22) eine radial nach außen abragende Schulter (24) aufweist, die insbesondere als umlaufender Außenbund ausgebildet ist.

5. Ventileinrichtung nach Anspruch 4, **dadurch gekennzeichnet, dass** die Schraubhülse (30) eine radial nach innen ragende, insbesondere als umlaufender Innenbund ausgebildete Schulter (42) aufweist, wobei die Schulter (24) des Anschlusselements (20; 22) und die Schulter (42) der Schraubhülse (30) beim Einschrauben der Schraubhülse in den Anschlussbereich (40) der Ventileinrichtung (10) aneinander anliegen und zusammenwirken.

6. Ventileinrichtung nach Anspruch 5, **dadurch gekennzeichnet, dass** die aneinander anliegenden Anlageflächen der beiden Schultern (24, 42) des Anschlusselements (20; 22) und der Schraubhülse (30) komplementär zueinander verlaufen und einen Winkel zur Längsachse einschließen, der kleiner als 90° ist.

7. Ventileinrichtung nach einem der vorhergehenden Ansprüche, **dadurch gekennzeichnet, dass** die Schraubhülse (30) ein Außengewinde (32) aufweist, das mit einem im Anschlussbereich (40) der Ventileinrichtung (10) angeordneten Innengewinde (34) zusammenwirkt.

8. Ventileinrichtung nach einem der vorhergehenden Ansprüche, **dadurch gekennzeichnet, dass** zwischen dem Anschlusselement (20; 22) und der Ventileinrichtung (10) außerhalb des Gewindebereichs (32, 34) mindestens eine Dichtung, insbesondere ein O-Ring, angeordnet ist.

9. Ventileinrichtung nach Anspruch 8, **dadurch gekennzeichnet, dass** die Dichtung zwischen der Stirnseite des Anschlusselements (20; 22) und der Ventileinrichtung (10) angeordnet ist.

10. Ventileinrichtung nach einem der vorhergehenden Ansprüche, **dadurch gekennzeichnet, dass** das Anschlusselement (20; 22) an seiner von der Ventileinrichtung (10) abgewandten Seite ein Außen- und/oder ein Innengewinde aufweist.

11. Ventileinrichtung nach einem der vorhergehenden Ansprüche, **dadurch gekennzeichnet, dass** das Anschlusselement (20; 22) austauschbar ist.

12. Ventileinrichtung nach einem der vorhergehenden Ansprüche, **dadurch gekennzeichnet, dass** das Anschlusselement (20; 22) und/oder die Schraubhülse (30) aus Kunststoff oder Metall, insbesondere aus Edelstahl, hergestellt ist/sind.

13. Ventileinrichtung nach einem der vorhergehenden Ansprüche, **dadurch gekennzeichnet, dass** die Schraubhülse (30) auf einer nach außen zeigenden Seite eine Rändelung oder Werkzeugangriffsfläche aufweist.

14. Ventileinrichtung nach einem der vorhergehenden Ansprüche, **dadurch gekennzeichnet, dass** die Schraubhülse (30) zwei- oder mehrteilig ausgebildet ist.
